# EUROPEAN PATENT SPECIFICATION

(11) **EP 2 489 508 B1**
(45) Date of publication and mention of the grant of the patent: **13.11.2013**
(21) Application number: 12153833.4
(22) Date of filing: 03.02.2012
(51) Int. Cl.: B32B 17/10, C03C 27/12

(54) **Laminated safety glazing with possibly perforated intermediate layer**
Verbundsicherheitsglas mit gegebenenfalls perforierter Zwischenschicht
Vitrage feuilleté de sécurité avec couche intermédiaire éventuellement perforée

(30) Priority: 17.02.2011 NL 2006223
(43) Date of publication of application: 22.08.2012
(73) Proprietor: Chameleon Lab B.V., 2031 ET Haarlem (NL)
(72) Inventor: van Rongen, Jan, 2013 GK Haarlem (NL); Nieuwenhuis, Ruud, 1351 GG Almere (NL)
(74) Representative: Klavers, Cornelis

(56) References cited:
- EP-A1- 2 261 030
- US-A1- 2006 154 049
- US-A1- 2008 210 361
- US-A1- 2009 219 468
- US-B1- 6 797 396

## Description

The present invention relates to a glazing according to the preamble of claim 1.

The invention further relates to a method of manufacturing such a glazing according to the preamble of claim 10.

The most common version of laminated glass is that where use is made of one or more intermediate layers in the form of P.V.B foils (Polyvinyl butyral). This version requires the laminated glass to be previously made to measure; the reason for this being that at a later stage it cannot be cut to other sizes anymore. This applies specifically to laminated glazing made from hardened glass types.

Other well-known intermediate layers are E.V.A. (ethylene vinyl acetate) and T.P.U. (Thermoplastic polyurethane) which both form so - termed synthetic resin glue systems. The plates or panes plus the synthetic resin layers in the form of foils are passed, during the manufacturing process, between two rolls in order to remove any air bubbles. In an "autoclave", the panes plus the foil are pressed together under the influence of pressure and heat, and are glued together during the heating process. As a result, a clear and transparent glazing is obtained. It is also possible to use heating furnaces which generate only heat, no pressure. If said heating furnaces are used, the glass plates must be previously provided on top of one another by means of a vacuumized plastic bags in order to preclude air inclusions.

The reason why a hardened glass type is used resides in that it must be precluded that in case of breakage of the glazing due to any cause, personal injury or damage to goods occurs. In principle, after breakage, the glazing will remain in, for example, a façade, thus allowing it to be replaced at a later point in time.

If, in addition to the use of said glue system, various synthetic resin foils having different energetic properties are added to the laminated glazing, for example toned and/or reflective or UV radiation - reflecting foils, then a glazing with sun - reflecting or UV reflecting properties is obtained. If a foil is used having optically multi-refractive properties, then typical, external viewing angle - dependent colour effects are generated which can be observed on the outside of a building. This phenomenon occurs, in particular, when use is made of Multi Optical Foils, also referred to as "dichroic" foils. These foils, by virtue of their wafer - thin multilayer nano laminate, are capable of refracting visible light into prismatic light. These colour effects occur and change dynamically as a result of a change of the position of the sun (angle of incidence), or as a result of persons moving past a building. In addition, by means of a choice of combinations of materials and/or laminates of the intermediate layer, a thermal, insulating, or safety factor can be added to the glazing. In particular, the addition of a plurality of synthetic resin foils having properties as described hereinabove between the glass plates to be glued together, plays an important part in the present invention. In this respect, maintaining and meeting the required European safety standards for laminated safety glass is of paramount importance. In all cases, it is necessary that a strong and solidly coherent glazing composed of a plurality of glass or synthetic resin plates having the desired properties is obtained. Any deviations of the desired optical refraction and colour properties of the glazing due to the use therein of one or more intermediate layers, such as foils and/or coatings, should be minimal in view of the relatively large differences between inside and outside temperature which have to be bridged sometimes, and should remain minimal over time. In other words the optical distortion associated therewith is be minimal irrespective the built up and composition.

Claim 1 is delimited from US-2009/0219468 A1 which discloses a glazing which is composed of a glass plate in the form of a glass pane, a PVB layer and an infrared reflective film. Secured to a second plate are PVB layers representing a transparent laminate. Both plates are secured by means of a transparent glue.

The same observations with respect to the cutting of the glass plates once they have been manufactured as laminated glass apply to all currently available gluing methods, namely that cutting these manufactured glass plates is impossible.

Claim 10 is delimited from EP-2261030 A1 and discloses a multistep method. A first pre-laminate is prepared from a glass plate, a polyester film which is optionally endowed with a reflective stack and a laminating sheet which assembly is then autoclaved and its cover plate removed. In a second step this pre-laminate is superposed with a second laminating sheet and a cover plate, where after this whole assembly is autoclaved.

It is an object of the present to provide an improved, strongly adhering glazing which comprises a number of layers which are to be glued together, and which is free of undesirable optical distortion. In addition, said glazing must meet the applicable requirements, irrespective of the type of gluing system and the manufacturing method used.

To achieve this, the glazing according to the invention has the characterising features of claim 1. The corresponding method has, according to the invention, the characteristics of claim 10.

The glazing and method according to the invention have a production technical advantage and, associated therewith, a cost price advantage, because the individual plates can be joined together to form a single final product at a later point in time. Unlike the glazing of the prior art, the individual, processed plates can be prefabricated in a further advantageous manner.

This is made possible by a suitable glued joint enabling the (glass) plates to be provided beforehand with the desired/suitable foil material. The glue system has already been provided on this foil material by means of a cold "dry lamination method". By virtue thereof, the individual plates can be manufactured as semi-finished products which are held in stock and which, if required, at a later point in time, for example in the case of a definite order, are assembled into the desired final product. After all, the prefabricated single glass plates, which have already been provided with the desired foil material, only need to be joined using a single - layer, single-sided joint, such as a PVB joint, after which they are bonded together by means of heat or by being pressed together as the case may be.

The single, for example, glass plate may also be supplied to third parties who finish the prefabricated glass plate into the laminated final product by providing the missing glass plate at their works.

Said invention enables a range of sizes and types of glass systems having varying characteristics to be prefabricated and held in stock, without "knowledge" being required in respect of the final product in which the glazing will be applied.

An advantage of the glazing according to the invention resides in that the application of the open parts, holes or perforations makes it possible to adjust the amount of sunlight, or visible light, which is allowed to enter at a given application as window or pane glazing. In addition, the amount of light reflected back to the exterior can be influenced, which is important for the possible perception of the desired external, i.e. observable outside a building, dynamic colour effects.

It has further been found to be advantageous that the open parts in the intermediate layer, particularly in the form of holes and perforations, improve the manufacture, the processability and the durability of the glass plates to be glued together.

This can be attributed to the fact that during the manufacture, glue flows into the open perforations, resulting in a more direct contact between the coatings, foils and/or glass plates surrounding the intermediate layer or forming part of said intermediate layer. As a result, a better adhering and stronger glazing is achieved, irrespective of whether one or more films or foils with decorative, energetic, optical or communicative properties are additionally used in the intermediate layer.

It has also been found that the holes and perforations advantageously affect the control and selection of internal lighting possibilities. On the rear side of the glazing according to the invention, an illumination system may be provided which, in the glazing, reflects from the non - perforated parts of the intermediate layer towards the outside as well as towards the inside, or which may be visible on both sides via said perforations. As a result, from the outside, this gives the impression that the facade of the building is lit from inside also during the night. This is part of the so called "landmark by night" effect.

If required, a hard coat laminate to be additionally provided, in an embodiment of claim 2, on the selected characterizing foil to be interposed, precludes that the foil is damaged easily and at the same time enables easy processing of the foil during cleaning. An important advantage of this processing method also resides in that the cold application according to the "dry lamination" method precludes that the foil may still be subject to floating, creepage and deformation etc., which previously adversely affected the uniformity and uniform quality of the final product. Damage due to exposure to sunlight can be prevented by applying an UV reflecting layer on the foil or the hard coat.

The glazing according to the invention can preferably be applied to unique glass fibre facades on prominent buildings. The glazing may further preferably be applied between synthetic resin plates of a composite material, i.e. as insert between the liquid composite material and glass fibre cloths.

Additional, detailed, possible embodiments which are set forth in the remaining claims are given in the description hereinbelow together with the associated advantages.

The glazing and the method of manufacturing thereof, both according to the present invention, will now be explained in greater detail with reference to the figures below, in which corresponding parts of the glazing are provided with the same reference numerals. In the figures:
- Figure 1 shows a side view of a possible embodiment of the glazing according to the invention, which comprises two plates; and
- Figure 2 shows a plan view of a portion of the intermediate layer comprising open parts, as used in the glazing of figure 1.

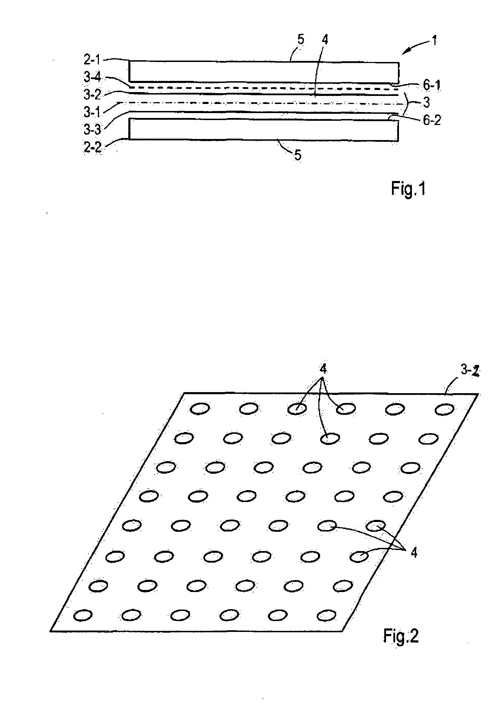

Figure 1 shows a side view of a glazing 1 which, in this case, is composed of two glued - together plates 2 - 1, 2 - 2 (also indicated as 2) of transparent material, mostly glass plates or plates of a synthetic resin or composite material. The glazing 1 may alternatively comprise three or more such, generally transparent, plates which, in this case, are separated from each other by intermediate layers 3, at least one of which is a layer 3-1 which comprises optically multi - refractive foil material, mostly including a so - termed dichroic layer. The foil material 3-1 is at least partly transparent to visible light. The foil material, if necessary, comprises open parts 4.

The intermediate layer 3 may comprise a hard coat and/or a UV reflecting layer 3-4 between the foil material 3-2 and the flat side 6-1, yielding the above mentioned advantage.

Figure 2 shows a plan view of the intermediate layer 3 having open parts 4, here in the form of a coating, film or foil, in particular a synthetic resin foil layer 3-1 of a material having optically multi - refractive properties, which foil material is provided, in this case, with holes, apertures or perforations 4. The open parts 4 may alternatively be formed by gaps between, for example, strips, wherein, at certain locations, the material between the strips has been omitted from the layer 3-1. The open parts 4 are mostly perforations which are uniformly distributed over the surface of the at least one layer 3-1, and the dimensions of said perforations are so small that, viewed from some distance with respect to the glazing 1, the perforations cannot be individually observed, but they do allow the degree to which light is allowed to pass to be influenced.

During the manufacturing process, glue, not shown in the figures, flows, thereby causing the plates to be glued together or laminated into a strong and solid assembly, and glue also flows in the open parts 3, resulting in very good contact between, in particular, the one or more layers of intermediate material 3-2, 3-3 which, if necessary, extend on either side of the perforated foil 3-1.

If necessary, a plurality of perforated foil layers may be combined with different kinds of foils, such as foils having decorative, energetic, thermal, optical or communicative properties.

In general, the ratio between the surfaces, at least of layer 3-1, which are and which are not provided with open parts 4 is chosen in dependence upon the quantity of light to be passed or reflected by the glazing 1 as a whole, in order to achieve a sometimes desired optical effect. In practice, the ratio is such that less then 80%, less then 50% or less than 30% of the surface of the layer 3-1 is formed by the open parts 4. Such ratios apply, for example, if one or more optically multi - refractive, so - termed dichroic intermediate layers 3 are provided between the at least two glass plates 2. In this manner, also an optically colour refractive, viewing angle - dependent effect can be brought about. The mostly polymeric material used for such an intermediate layer composed of a plurality of layers is commercially available, as is known, from Minnesota Mining and & MFG (3M®).

It is of course also possible to provide, if necessary, the outer sides 5 of the at least two plates 2 with a desired coating or foil, not shown in the figures. Said plates 2, if they are manufactured from real glass, may be laminated glass, hardened glass and/or safety glass. In addition, the material of the intermediate layer may be at least partly transparent. Furthermore, the plates 2 and/or the glue may be provided with one or more pigments or comprise these pigments.

A glazing 1, as set forth hereinabove, may be used as window glass, but also, for example, as facade covering, wall covering or inside wall covering.

In the manufacture of the glazing 1, for example, an optically multi - refractive foil or layer 3-2 is dry - laminated onto a flat inner side 6-1 of the first plate 2-1, and, if necessary, a hard coat and/or a UV reflective layer 3-4 is provided therebetween. Alternatively, the multi - refractive foil material may comprise open parts. A transparent PVB is applied onto a flat inner side 6-2 of the second plate 2-2. Each one of the plates 2-1, 2-2 can thus be prefabricated. Subsequently, at a point in time when the glazing 1 has to be made ready for use, only the two prefabricated plates 2-1, 2-2 need to be glued together, or laminated, with their flat inner sides 6-1, 6-2, by heating said inner sides, for example in an autoclave, and pressing them together. The method of manufacturing has the additional advantage that, if required, prior to and not necessarily during the process of fitting together the two prefabricated plates 2, one or more types of a desired foil can be applied to said plates. The transparent glue and / or the transparent laminate may comprise polyvinyl butyral (PVB), ethylene vinyl acetate (EVA), thermoplastic polyurethane (TPU), a resin substance and / or the like. The optically multi - refractive foil material may have a characteristic optical pattern, and may in particular be a foil sold by the brand name of Chameleon Radiant Mirror Facade ®.

## Claims

1. A glazing (1) which is composed of at least two glass or synthetic resin plates which are to be glued together and between which an intermediate layer (3) of an optically multi - refractive foil material (3-2) is provided which, on one side, is laminated onto a flat side (6-1) of the first plate (2-1) and which, on the other side of said foil material (3-2), is provided with a transparent glue (3-1), and wherein the flat side (6-2) of the second plate (2-2), which is situated opposite the flat side (6-1) of the first plate (2-1), is provided with a transparent laminate (3-3) which is laminated against the glue (3-1), **characterized in that** the foil material (3-2), has open parts (4) which are transparent to visible light, and which are formed by apertures, holes and/or perforations in the foil material (3-2).

2. The glazing (1) according to claim 1, **characterized in that** the intermediate layer (3) comprises a hard coat and/or a UV reflecting layer (3-4) provided between the foil material (3-2) and the flat side (6-1).

3. The glazing (1) according to claim 1 or 2, **characterized in that** the ratio between the surfaces of the foil material (3-2) which are and which are not provided with open parts (4) depends on the quantity of light to be passed or reflected by the glazing.

4. The glazing (1) according to any one of claims 1-3, **characterized in that** less then 80%, less then 50% or less than 30% of the surface of the foil material (3-2) is formed by the open parts (4).

5. The glazing (1) according to any one of claims 1-4, **characterized in that** one or more optically multi - refractive foil material layers (3-2), in particular a dichroic layer, are provided at least between the two or more glass plates (2-1, 2-2).

6. The glazing (1) according to any one of claims 1-5, **characterized in that** the plates (2-1, 2-2) are glass plates which are made of laminated glass, hardened glass and/or safety glass.

7. The glazing (1) according to any one of claims 1-6, **characterized in that** the glazing (1) forms window pane glazing and / or window glazing and / or, for example, a facade covering, an exterior wall covering or an interior wall covering.

8. The glazing (1) according to any one of claims 1-7, **characterized in that** the transparent glue and / or the transparent laminate comprise polyvinyl butyral (PVB), ethylene vinyl acetate (EVA), thermoplastic polyurethane (TPU), a resin substance and / or an equivalent substance.

9. The glazing (1) according to any one of claims 1-8, **characterized in that** the transparent glue (3-1) is provided in open parts (4) present in the foil material (3-2), in particular in holes, apertures or perforations of the open parts (4).

10. A method in which a glazing (1) is manufactured by laminating an optically multi - refractive foil material (3-2) onto a flat side (6-1) of a first plate (2-1) by means of a transparent glue (3-1), and by applying a transparent laminate onto a flat side (6-2) of a second plate (2-2), **characterized in that** the plates (2-1; 2-2) thus prefabricated are laminated onto each other by means of a hot - pressing process.

11. The method according to claim 10, **characterized in that** the process of laminating the foil material (3-2) onto the flat side (6-1) of the first plate (2-1) is a lamination process, in particular a single -sided or dry lamination process, very particularly a single -sided dry lamination process.

12. The method according to claim 10 or 11, **characterized in that** the optically multiple refractive foil material (3-2) has a characteristic optical pattern, and in particular is a foil by the brand name of Chameleon Radiant Mirror Facade ®.

13. The method according to any one of claims 10-12, **characterized in that** the prefabricated plates (2-1; 2-2) are glued together under the influence of heat in an autoclave or in a furnace, particularly an infrared furnace.

## Patentansprüche

1. Glas (1), das aus mindestens zwei Glasplatten oder synthetischen Harzplatten zusammengesetzt ist, die zusammengeklebt werden sollen und zwischen denen eine Zwischenschicht (3) eines optisch mehrfach strahlenbrechenden Folienmaterials (3-2) vorgesehen ist, das auf der einen Seite auf einer flachen Seite (6-1) der ersten Platte (2-1) beschichtet ist und das auf der anderen Seite des Folienmaterials (3-2) mit einem durchlässigen Klebstoff (3-1) versehen ist, und wobei die flache Seite (6-2) der zweiten Platte (2-2), die sich gegenüber der flachen Seite (6-1) der ersten Platte (2-1) befindet, mit einem durchlässigen Verbund (3-3) versehen ist, der gegenüber dem Klebstoff (3-1) beschichtet ist, **dadurch gekennzeichnet, dass** das Folienmaterial (3-2) offene Teile (4) aufweist, die gegenüber dem sichtbaren Licht durchlässig sind und die durch Durchlässe, Löcher und/oder durch Perforationen in dem Folienmaterial (3-2) ausgebildet sind.

2. Glas (1) nach Anspruch 1, **dadurch gekennzeichnet, dass** die Zwischenschicht (3) eine harte Beschichtung und/oder eine UV-reflektierende Schicht (3-4) umfasst, die zwischen dem Folienmaterial (3-2) und der flachen Seite (6-1) vorgesehen ist.

3. Glas (1) nach Anspruch 1 oder 2, **dadurch gekennzeichnet, dass** das Verhältnis zwischen den Oberflächen des Folienmaterials (3-2), die mit offenen Teilen (4) und nicht mit offenen Teilen (4) versehen sind, von der Menge des Lichts, das durch das Glas hindurchgelassen oder reflektiert werden soll, abhängt.

4. Glas (1) nach einem der Ansprüche 1 bis 3, **dadurch gekennzeichnet, dass** weniger als 80 %, weniger als 50 % oder weniger als 30 % der Oberfläche des Folienmaterials (3-2) durch die offenen Teile (4) gebildet ist.

5. Glas (1) nach einem der Ansprüche 1 bis 4, **dadurch gekennzeichnet, dass** eine oder mehrere optisch mehrfach strahlenbrechende Folienmaterialschichten (3-2), insbesondere eine dichromatische Schicht, mindestens zwischen zwei oder mehreren Glasplatten (2-1, 2-2) bereitgestellt sind.

6. Glas (1) nach einem der Ansprüche 1 bis 5, **dadurch gekennzeichnet, dass** die Platten (2-1, 2-2) Glasplatten sind, die aus Verbundglas, gehärtetem Glas und/oder aus Sicherheitsglas hergestellt sind.

7. Glas (1) nach einem der Ansprüche 1 bis 6, **dadurch gekennzeichnet, dass** das Glas (1) eine Fensterscheibe und/oder ein Fensterglas und/oder zum Beispiel eine Fassadenbeschichtung, eine Außenwandbeschichtung oder eine Innenwandbeschichtung bildet.

8. Glas (1) nach einem der Ansprüche 1 bis 7, **dadurch gekennzeichnet, dass** der durchlässige Klebstoff und/oder der durchlässige Verbund Polyvinylbutyral (PVB), Ethylenvinylacetat (EVA), thermoplastisches Polyurethan (TPU), eine Harzsubstanz und/oder eine äquivalente Substanz umfassen.

9. Glas (1) nach einem der Ansprüche 1 bis 8, **dadurch gekennzeichnet, dass** der durchlässige Klebstoff (3-1) in offenen Teilen (4), die auf dem Folienmaterial (3-2) vorhanden sind, insbesondere in Löchern, Durchlässen oder in Perforationen der offenen Teile (4) bereitgestellt ist.

10. Verfahren, in dem Glas (1) durch Beschichten eines optisch mehrfach strahlenbrechenden Folienmaterials (3-2) auf einer flachen Seite (6-1) einer ersten Platte (2-1) mittels eines durchlässigen Klebstoffs (3-1) und durch Auftragen eines durchlässigen Verbundes auf eine flache Seite (6-2) einer zweiten Platte (2-2) hergestellt wird, **dadurch gekennzeichnet, dass** die Platten (2-1; 2-2), die so vorgefertigt sind, mittels eines Prozesses des Heißpressens aufeinander beschichtet werden.

11. Verfahren nach Anspruch 10, **dadurch gekennzeichnet, dass** der Prozess des Beschichtens des Folienmaterials (3-2) auf der flachen Seite (6-1) der ersten Platte (2-1) ein Beschichtungsprozess ist, insbesondere ein einseitiger oder trockener Beschichtungsprozess, ganz besonders ein einseitiger, trockener Beschichtungsprozess.

12. Verfahren nach Anspruch 10 oder 11, **dadurch gekennzeichnet, dass** das optisch mehrfach strahlenbrechende Folienmaterial (3-2) ein charakteristisches optisches Muster aufweist und insbesondere gibt es diesbezüglich eine Folie unter dem Markennamen Chameleon Radiant Mirror Facade ®.

13. Verfahren nach einem der Ansprüche 10 bis 12, **dadurch gekennzeichnet, dass** die vorgefertigten Platten (2-1; 2-2) unter dem Einfluss von Wärme in einem Autoklav oder in einem Ofen, besonders in einem Infrarotofen zusammengeklebt werden.

## Revendications

1. Glaçage (1) qui est composé d'au moins deux plaques de verre ou en résine synthétique qui doivent être collées ensemble et entre lesquelles une couche intermédiaire (3) d'un matériau de feuille optiquement multi-réfractive (3-2) est prévue, laquelle, d'un côté, est stratifiée sur un côté plat (6-1) de la première plaque (2-1) et laquelle, de l'autre côté dudit matériau de feuille (3-2), est munie d'une colle transparente (3-1), et dans laquelle le côté plat (6-2) de la deuxième plaque (2-2), qui est situé à l'opposé du côté plat (6-1) de la première plaque (2-1), est muni d'un stratifié transparent (3-3) qui est stratifié contre la colle (3-1), **caractérisé en ce que** le matériau de feuille (3-2), a des parties ouvertes (4) qui sont transparentes à la lumière visible, et qui sont formées par des ouvertures, des trous et/ou des perforations dans le matériau de feuille (3-2).

2. Glaçage (1) selon la revendication 1, **caractérisé en ce que** la couche intermédiaire (3) comprend un revêtement dur et/ou une couche de réflexion des UV (3-4) prévue entre le matériau de feuille (3-2) et le côté plat (6-1).

3. Glaçage (1) selon la revendication 1 ou 2, **caractérisé en ce que** le rapport entre les surfaces du matériau de feuille (3-2) qui sont et qui ne sont pas prévues avec des parties ouvertes (4) dépend de la quantité de lumière qui passe ou qui est réfléchie par le glaçage.

4. Glaçage (1) selon l'une quelconque des revendications 1-3, **caractérisé en ce que** moins de 80%, moins de 50% ou moins de 30% de la surface du matériau de feuille (3-2) est formé par les parties ouvertes (4).

5. Glaçage (1) selon l'une quelconque des revendications 1-4, **caractérisé en ce que** une ou plusieurs couches de matériau de feuille multi-réfractive (3-2) en particulier une couche dichroïque, sont prévues au moins entre deux ou plusieurs plaques de verre (2-1, 2-2).

6. Glaçage (1) selon l'une quelconque des revendications 1-5, **caractérisé en ce que** les plaques (2-1, 2-2) sont des plaques de verre qui sont faites de verre stratifié, verre durci et/ou verre de sécurité.

7. Glaçage (1) selon l'une quelconque des revendications 1-6, **caractérisé en ce que** le glaçage (1) forme un glaçage de panneau de fenêtre et/ou un glaçage de fenêtre et/ou par exemple, un revêtement de façade, un revêtement de mur extérieur ou un revêtement de mur intérieur.

8. Glaçage (1) selon l'une quelconque des revendications 1-7, **caractérisé en ce que** la colle transparente et/ou le stratifié transparent comprend du polyvinyle butyral (PVB), de l'éthylène-acétate de vinyle (EVA), du polyuréthane thermoplastique (TPU), une substance de résine et/ou une substance équivalente.

9. Glaçage (1) selon l'une quelconque des revendications 1-8, **caractérisé en ce que** la colle transparente (3-1) est prévue dans les parties ouvertes (4) présentes dans le matériau de feuille (3-2), en particulier dans les trous, ouvertures ou perforations des parties ouvertes (4).

10. Procédé dans lequel un glaçage (1) est fabriqué en stratifiant un matériau de feuille multi-réfractive (3-2) sur un côté plat (6-1) d'une première plaque (2-1) au moyen d'une colle transparente (3-1) et en appliquant un stratifié transparent sur un côté plat (6-2) d'une seconde plaque (2-2), **caractérisé en ce que** les plaques (2-1; 2-2) ainsi préfabriquées sont stratifiées les unes sur les autres au moyen d'un procédé de presse à chaud.

11. Procédé selon la revendication 10, **caractérisé en ce que** le processus de stratification du matériau de feuille (3-2) sur le côté plat (6-1) de la première plaque (2-1) est un processus de stratification, en particulier un processus de stratification sur un côté ou à sec, très particulièrement un processus de stratification à sec sur un côté.

12. Procédé selon la revendication 10 ou 11, caractérisé en que le matériau de feuille optiquement multi-réfractive (3-2) a un modèle optique caractéristique, et en particulier est une feuille avec le nom commercial de Chameleon Radiant Mirror Facade ®,

13. Procédé selon l'une quelconque des revendications 10-12, caractérisé en que les plaques préfabriquées (2-1; 2-2) sont collées ensemble sous l'influence de la chaleur dans un autoclave ou dans un four, particulièrement dans un four à infrarouges.
